# EUROPEAN PATENT APPLICATION

(11) **EP 4 800 069 A1**
(43) Date of publication of application: **02.09.2026**
(21) Application number: 24882334.6
(22) Date of filing: 21.10.2024
(51) Int. Cl.: C08L 29/04, B32B 27/28, C08K 3/22

(54) **COMPOSITION, MOLDED BODY, FILM, AND LAYERED STRUCTURE**

(30) Priority: 27.10.2023 JP 2023184826
(71) Applicant: Mitsubishi Chemical Corporation, Tokyo 100-8251 (JP)
(72) Inventor: KISHIMOTO, Yukihiro, Tokyo 100-8251 (JP)
(74) Representative: Hoffmann Eitle
(86) International application number: PCT/JP2024/037363
(87) International publication number: WO 2025/089221

(57) **Abstract**

A composition containing an ethylene-vinyl alcohol copolymer (A), a zinc oxide (B), and a zinc salt (C) other than the zinc oxide (B), the zinc salt (C) being an inorganic zinc salt and/or an organic zinc salt having from 1 to 6 carbon atoms, and a mass ratio [(C)/(B)] of a content of the zinc salt (C) in terms of metal to a content of the zinc oxide (B) in terms of metal being more than 0.5 is provided as a composition having excellent gas barrier properties, especially excellent oxygen barrier properties, at high humidity.

## Description

### Technical Field

The present disclosure relates to a composition, a molded body, a film, and a multilayer structure.

### Background Art

Ethylene-vinyl alcohol copolymers (hereinafter, may be referred to as "EVOH resin") are excellent in transparency, gas barrier properties against oxygen or the like, aroma retaining properties, solvent resistance, oil resistance, mechanical strength, and the like. The copolymers are molded into films, sheets, bottles, and the like, and are widely used as various packaging materials such as food packaging materials, pharmaceutical packaging materials, industrial drug packaging materials, and agrochemical packaging materials.

However, because an EVOH resin contains a relatively active hydroxy group in the molecule, the EVOH resin is easily and remarkably affected by humidity, and the gas barrier properties are significantly deteriorated in a high humidity environment.

As a resin composition using an EVOH resin, Patent Document 1 describes a resin composition having excellent odorous gas barrier properties by allowing, as a deodorant, a zinc compound to be contained in an EVOH resin.

### Citation List

### Patent Literature

Patent Document 1: JP 10-101881 A

### Summary

### Technical Problem

However, although the resin composition described in Patent Document 1 provides a resin composition containing a zinc compound in an EVOH resin, the resin composition aims to improve the odorous gas barrier properties and thus has unsatisfactory gas barrier properties at high humidity, especially unsatisfactory oxygen barrier properties at high humidity, and thus further improvement has been demanded.

In such circumstances, the present disclosure provides a composition having excellent gas barrier properties at high humidity, especially excellent oxygen barrier properties at high humidity.

### Solution to Problem

As a result of diligent research in light of such circumstances, the inventor of the present disclosure found that excellent gas barrier properties at high humidity, especially excellent oxygen barrier properties at high humidity, can be achieved when an EVOH resin (A) is allowed to contain specific amounts of zinc oxide (B) and a specific zinc salt (C).

That is, the present disclosure provides the following aspects.
[1] A composition containing an ethylene-vinyl alcohol copolymer (A), a zinc oxide (B), and a zinc salt (C) other than the zinc oxide (B),
   the zinc salt (C) being an inorganic zinc salt and/or an organic zinc salt having from 1 to 6 carbon atoms, and
   a mass ratio [(C)/(B)] of a content of the zinc salt (C) in terms of metal to a content of the zinc oxide (B) in terms of metal being more than 0.5.
[2] The composition according to [1], where the content of the zinc oxide (B) in terms of metal is from 0.005 to 10 parts by mass relative to 100 parts by mass of the ethylene-vinyl alcohol copolymer (A).
[3] The composition according to [1] or [2], where the zinc salt (C) is an inorganic zinc salt.
[4] The composition according to any one of [1] to [3], where a main peak of X-ray diffraction is present at 2θ = 2 to 15°, as measured by wide-angle X-ray diffraction (XRD) using a CuKα line.
[5] A molded body including the composition according to any one of [1] to [4].
[6] A film including the composition according to any one of [1] to [4].
[7] A multilayer structure including a layer containing the composition according to any one of [1] to [4].

### Advantageous Effects

The composition of the present disclosure has excellent gas barrier properties at high humidity, especially excellent oxygen barrier properties at high humidity.

### Description of Embodiments

The present disclosure will be described below with reference to embodiments for carrying out the present disclosure. However, the present disclosure is not limited to the embodiments described below.

Note that, in the present description, the wording "x and/or y (with x and y being any configurations)" means at least one selected from x and y, and includes the three meanings of only x, only y, and both x and y.

Unless otherwise specified, the expression "from X to Y" (with X and Y being any numbers) means "X or more and Y or less" as well as "preferably more than X" or "preferably less than Y".

When the expression "X or more" (X being any number) or "Y or less" (Y being any number) is used, the expression also means "preferably more than X" or "preferably less than Y".

In the present description, with respect to numerical ranges described in steps, the upper limit or the lower limit of a numerical range of a certain step can be optionally combined with the upper limit or the lower limit of a numerical range of another step. In addition, in a numerical range described in the present description, the upper limit or the lower limit of the numerical range can be replaced with a value presented in the Examples.

### Composition

The composition according to an embodiment of the present disclosure (hereinafter, may be also referred to as "present composition") contains an EVOH resin as a main component and specific amounts of zinc oxide and of a specific zinc salt other than the zinc oxide.

That is, the present composition contains an EVOH resin as a base resin, and the content of the EVOH resin in the present composition is usually 70 mass% or more, preferably 90 mass% or more, and more preferably 95 mass% or more.

Hereinafter, the respective components will be described.

### EVOH Resin (A)

The EVOH resin (A) used in the present embodiment is usually a resin produced by saponification of an ethylene-vinyl ester copolymer, which is a copolymer of ethylene and a vinyl ester monomer, and is a water-insoluble thermoplastic resin.

Polymerization of ethylene and the vinyl ester monomer can be carried out by any known polymerization method, for example, solution polymerization, suspension polymerization, or emulsion polymerization, and solution polymerization using methanol as a solvent is generally used. Saponification of the resulting ethylene-vinyl ester copolymer can also be carried out by a known method.

The EVOH resin (A) thus produced is mainly made of an ethylene-derived structural unit and a vinyl alcohol structural unit, and usually contains a small amount of a vinyl ester structural unit that remains without being saponified.

As the vinyl ester monomer, vinyl acetate is typically used from the viewpoints of good market availability and good impurity treatment efficiency during production. Examples of another vinyl ester monomer include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. An aliphatic vinyl ester having usually from 3 to 20 carbon atoms, preferably from 4 to 10 carbon atoms, and more preferably from 4 to 7 carbon atoms, can be used. One of these may be used alone or two or more these may be used in combination.

The content of the ethylene structural unit in the EVOH (A) can be controlled by the pressure of ethylene when the vinyl ester monomer and ethylene are copolymerized, and is usually from 20 to 60 mol%, preferably from 25 to 50 mol%, and more preferably from 25 to 35 mol%. When the content is too low, the gas barrier properties at high humidity and melt moldability tend to decrease. Conversely, when the content is too high, the gas barrier properties tend to decrease.

The content of the ethylene structural unit can be measured based on ISO 14663.

The degree of saponification of the vinyl ester component in the EVOH resin (A) can be controlled by the amount of a saponification catalyst (usually, an alkaline catalyst such as sodium hydroxide is used), the temperature, the time, and the like during saponification of the ethylene-vinyl ester copolymer, and the degree of saponification is usually from 90 to 100 mol%, preferably from 95 to 100 mol%, and more preferably from 99 to 100 mol%. When the degree of saponification is too low, properties such as the gas barrier properties, thermal stability, and moisture resistance tend to be reduced.

The degree of saponification of the EVOH resin (A) can be measured based on JIS K 6726 (provided that the EVOH resin is used in the form of a solution wherein the EVOH resin is homogeneously dissolved in a water/methanol solvent).

The melt flow rate (MFR) (210°C; load: 2160 g) of the EVOH resin (A) is usually from 0.5 to 100 g/10 min, preferably from 1 to 50 g/10 min, and more preferably from 3 to 35 g/10 min. When the MFR is too high, the film formability tends to be unstable. When the MFR is too low, the viscosity tends to be too high, which leads to difficulty in melt extrusion.

The MFR is an indicator of the degree of polymerization of the EVOH resin and can be adjusted by the amount of a polymerization initiator or the amount of a solvent in the copolymerization of the ethylene and the vinyl ester monomer.

Note that, in the present description, MFR is determined by measuring a rate of outflow of a sample through an orifice having a length of 8 mm and an orifice size of 2.095 mm by using a semi-automated melt flow rate tester (available from Toyo Seiki Seisaku-sho, Ltd.) at a temperature of 210°C and a load of 2160 g.

The EVOH resin (A) may further contain a structural unit derived from a comonomer described below within a range such that the effects of the present disclosure are not impaired (for example, in an amount of 10 mol% or less of the EVOH resin. The lower limit value is 0 mol%).

Examples of the comonomer include comonomers such as olefins, such as propylene, 1-butene, and isobutene; hydroxy group-containing α-olefins, such as 3-buten-1-ol, 3-butene-1,2-diol, 4-penten-1-ol, and 5-hexene-1,2-diol, and derivatives thereof such as esterified materials and acylated materials; hydroxyalkylvinylidenes, such as 2-methylenepropane-1,3-diol and 3-methylenepentane-1,5-diol; hydroxyalkylvinylidene diacetates, such as 1,3-diacetoxy-2-methylenepropane, 1,3-dipropionyloxy-2-methylenepropane, and 1,3-dibutyryloxy-2-methylenepropane; unsaturated acids, such as acrylic acid, methacrylic acid, crotonic acid, phthalic (anhydride), maleic (anhydride), and itaconic (anhydride), salts thereof or mono- or dialkyl esters having an alkyl group with 1 to 18 carbon atoms; acrylamides, such as acrylamide, N-alkylacrylamide having an alkyl group with 1 to 18 carbon atoms, N,N-dimethylacrylamide, 2-acrylamidepropanesulfonic acid or salts thereof, acrylamidepropyldimethylamine or acid salts or quaternary salts thereof; methacrylamides, such as methacrylamide, N-alkylmethacrylamide having an alkyl group with 1 to 18 carbon atoms, N,N-dimethylmethacrylamide, 2-methacrylamidepropane sulfonic acid or salts thereof, methacrylamidepropyldimethylamine or salts thereof or quaternary salts thereof; N-vinylamides, such as N-vinylpyrrolidone, N-vinylformamide, and N-vinylacetamide; vinyl cyanides, such as acrylonitrile and methacrylonitrile; vinyl ethers, such as alkyl vinyl ether having an alkyl group with 1 to 18 carbon atoms, hydroxyalkyl vinyl ether, and alkoxyalkyl vinyl ether; halogenated vinyl compounds, such as vinyl chloride, vinylidene chloride, vinyl fluoride, vinylidene fluoride, and vinyl bromide; vinylsilanes, such as trimethoxyvinylsilane; halogenated allyl compounds, such as allyl acetate and allyl chloride; allyl alcohols, such as allyl alcohol and dimethoxy allyl alcohol; trimethyl-(3-acrylamide-3-dimethylpropyl)-ammonium chloride and acrylamide-2-methylpropanesulfonic acid. One of these may be used alone or two or more these may be used in combination.

In particular, an EVOH resin having a primary hydroxy group in a side chain is preferable in that secondary moldability is improved while gas barrier properties are maintained, and among these, an EVOH resin produced by copolymerizing hydroxy group-containing α-olefins is preferred, and an EVOH resin having a 1,2-diol structure in a side chain is particularly preferred.

In particular, in the case of the EVOH resin having a primary hydroxy group in a side chain, the content of the structural unit derived from the monomer having the primary hydroxy group is usually preferably from 0.1 to 20 mol%, more preferably from 0.5 to 15 mol%, and particularly preferably from 1 to 10 mol%, of the EVOH resin.

Furthermore, the EVOH resin (A) used in the present embodiment may be an EVOH resin that has been subjected to a "post-modification" such as urethanization, acetalization, cyanoethylation, oxyalkylenation, or acylation.

Furthermore, the EVOH resin (A) used in the present embodiment may be a mixture with another different EVOH resin. Examples of such another different EVOH resin include those having different degrees of saponification, those having different degrees of polymerization, and those having different copolymerization components.

### Zinc Oxide (B)

As described above, the present composition contains zinc oxide (B).

The average particle size of the zinc oxide (B) is preferably 100 nm or less, more preferably 50 nm or less, and particularly preferably 30 nm or less. When the average particle size is more than 100 nm, transparency tends to decrease when formation into a film or the like is performed, and turbidity tends to be high. The lower limit value is usually 10 nm.

Examples of the measurement method of the average particle size include the dynamic light scattering (DLS) method and the sedimentation velocity method. The average particle size can be determined by a predetermined method.

The average particle size referred to herein is a median diameter.

The content of the zinc oxide (B) in terms of metal is usually from 0.005 to 10 parts by mass, preferably from 0.04 to 8 parts by mass, more preferably from 0.08 to 5 parts by mass, and particularly preferably from 0.1 to 2 parts by mass, relative to 100 parts by mass of the EVOH resin (A). When the content of the zinc oxide (B) is too low, gas barrier properties at high humidity tend to decrease. When the content is too high, transparency tends to decrease when formation into a film or the like is performed, and turbidity tends to be high.

Note that the content of zinc oxide in terms of metal is the content of zinc element.

The content of the zinc oxide (B) in terms of metal can be determined by dissolving the present composition in a mixed solvent of water/1-propanol = 1/1, separating a soluble component and an insoluble component, subjecting zinc in the insoluble component to ICP mass spectrometry by using an ICP mass spectrometer (Agilent 8800, available from Agilent Technologies).

### Zinc Salt (C) Other Than Zinc Oxide (B)

As described above, the present composition contains the zinc salt (C) other than the zinc oxide (B), and the zinc salt (C) is an inorganic zinc salt and/or an organic zinc salt having from 1 to 6 carbon atoms. One of the zinc salts (C) may be used alone, or two or more of the zinc salts (C) may be used in combination. Among these, a zinc salt that is soluble when dissolved in a mixed solvent of water/1-propanol = 1/1 is preferred, an inorganic zinc salt or an organic zinc salt having from 1 to 6 carbon atoms is more preferred, and an inorganic zinc salt is even more preferred.

Examples of the organic acid constituting the organic zinc salt having from 1 to 6 carbon atoms include monovalent carboxylic acids, such as lactic acid, acetic acid, and gluconic acid; divalent carboxylic acids, such as succinic acid, oxalic acid, and tartaric acid; and trivalent or higher carboxylic acids, such as citric acid. One of these may be used alone, or two or more of these may be used in combination. The organic zinc salt may be a hydrate or an anhydride.

From the viewpoint of excellent gas barrier properties at high humidity when a composition is formed, the organic zinc salt having from 1 to 6 carbon atoms is preferably a monovalent zinc carboxylate, and more preferably zinc lactate, zinc acetate, or hydrates thereof.

Examples of the inorganic zinc salt include halides of zinc, such as fluoride, chloride, bromide, and iodide of zinc; or oxo acid salts of zinc, such as nitrate, sulfate, phosphate, sulfonate, and carbonate of zinc. The inorganic zinc salt may be a hydrate or an anhydride.

From the viewpoint of excellent gas barrier properties at high humidity when a composition is formed, as the inorganic zinc salt, halides and oxo acid salts of zinc are preferred, and zinc chloride, zinc nitrate, or hydrates thereof are more preferred.

The content of the zinc salt (C) in terms of metal is usually from 0.01 to 10 parts by mass, preferably from 0.04 to 8 parts by mass, more preferably from 0.08 to 5 parts by mass, and particularly preferably from 0.1 to 2 parts by mass, relative to 100 parts by mass of the EVOH resin (A). When the content of the zinc salt (C) is too low, gas barrier properties at high humidity tend to decrease. When the content is too high, moldability of the composition tends to decrease.

Note that the content of zinc salt in terms of metal is the content of zinc element.

The content of the zinc salt (C) in terms of metal can be determined by dissolving the present composition in a water/alcohol mixed solvent, such as water/1-propanol, separating a soluble component and an insoluble component, subjecting zinc in the soluble component to ICP mass spectrometry by using an ICP mass spectrometer (Agilent 8800, available from Agilent Technologies).

The mass ratio [(C)/(B)] of the content of the zinc salt (C) in terms of metal to the content of the zinc oxide (B) in terms of metal is more than 0.5, preferably from 0.55 to 200, more preferably from 0.6 to 10, even more preferably from 0.7 to 7, and particularly preferably from 0.83 to 5. When the mass ratio is not satisfied, gas barrier properties at high humidity tend to decrease.

### Additional Thermoplastic Resin

The present composition can contain a thermoplastic resin other than the EVOH resin within a range such that the effects of the present disclosure are not impaired (for example, usually 30 mass% or less, preferably 20 mass% or less, more preferably 10 mass% or less, of the present composition. The lower limit value is 0 mass%).

As the additional thermoplastic resin, a known thermoplastic resin can be used, and examples thereof include a polyester-based resin, a polystyrene-based resin, a polyvinylchloride-based resin, a polycarbonate-based resin, an ionomer, polyvinylidene chloride, a polyester elastomer, a polyurethane elastomer, chlorinated polyethylene, and chlorinated polypropylene. One of these may be used alone or two or more these may be used in combination.

### Additional Compounding Agent

Furthermore, the present composition may contain a compounding agent (other than the zinc oxide (B) and the zinc salt (C)) that is typically blended in an EVOH resin in a range (for example, 5 mass% or less. The lower limit value is 0 mass%) that does not impair the effect of the present disclosure. Examples of the compounding agent that may be blended include an inorganic double salt (for example, hydrotalcite), a plasticizer (for example, an aliphatic polyalcohol such as ethylene glycol, glycerin, and hexanediol), an oxygen absorber [for example, an inorganic oxygen absorber such as aluminum powder and potassium sulfite; ascorbic acid and fatty acid esters and metal salts thereof, polyhydric phenols such as gallic acid and hydroxy group-containing phenolic aldehyde resins, a terpene compound, a blended material of a tertiary hydrogen-containing resin and a transition metal (for example, combination of polypropylene and cobalt), a blended material of a carbon-carbon unsaturated bond-containing resin and a transition metal (for example, combination of polybutadiene and cobalt), a photooxidation degradable resin (for example, polyketone), an anthraquinone polymer (for example, polyvinylanthraquinone), as well as a macromolecule-based oxygen absorber such as a material in which a photoinitiator (for example, benzophenone), an antioxidant other than those described above, and a deodorant (for example, active carbon) are added to these blended materials], a thermal stabilizer, a light stabilizer, a UV absorber, a coloring agent, an antistatic agent, a surfactant (however, excluding those used as a lubricant), an antimicrobial agent, an anti-blocking agent, and a filler (for example, an inorganic filler). One of these compounds may be used alone, or two or more of these may be used in combination.

### Method for Producing Composition

The present composition can be produced by mixing the EVOH resin (A), the zinc oxide (B), and the zinc salt (C) by a known method, such as a solution mixing method or a melt mixing method. Furthermore, these production methods can be optionally combined.

Examples of the solution mixing method include a method, in which a solution is prepared by using a commercially available EVOH resin (A) and a zinc oxide (B) and a zinc salt (C) are blended to this; a method, in which a solution is prepared by using a commercially available EVOH resin (A), a zinc oxide (B) and a zinc salt (C) are blended to this, this is subjected to solidification molding and then dried by solid-liquid separation with a known means; and a method, in which a zinc oxide (B) and a zinc salt (C) are blended in a uniform solution of an EVOH resin (A) (for example, water/alcohol solution) or an ethylene-vinyl ester copolymer solution before saponification during production process of the EVOH resin (A), then this is subjected to solidification molding and then dried by solid-liquid separation with a known means. As the drying method, various drying methods can be employed, and either static drying or fluidized drying may be employed. These methods can be performed in combination.

Examples of the melt mixing method include a method of melt-kneading a dry blend obtained by dry-blending a pellet-shaped EVOH resin (A), a zinc oxide (B), and a zinc salt (C); and a method of melt-kneading by adding a zinc oxide (B) and a zinc salt (C) into a molten EVOH resin (A).

As described above, in the present disclosure, different methods among those methods described above can be combined. Among those, a solution mixing method is preferable from the viewpoint of obtaining a resin composition that exhibits more significant effects of the present disclosure. In a case where the additional thermoplastic resin and an additional compounding agent are used, they are blended by a common process according to the production method.

The present composition obtained as described above exhibits gas barrier properties at high humidity; especially, the oxygen barrier properties improve over time immediately after exposure to high humidity, and high oxygen barrier properties are exhibited at the time when the improvement tendency reaches equilibrium. The theory behind achieving such effects is not clear; however, it is presumed that, such effects are achieved because, when the composition is exposed to high humidity, the zinc oxide (B) and the zinc salt (C) react using the EVOH resin (A) plasticized by water molecules as a reaction site, resulting in a layered zinc hydroxide, and the layered zinc hydroxide interacts with the EVOH resin molecules.

In the present disclosure, at high humidity means at 20 ± 5°C and 90 ± 10%RH.

For the present composition, the gas barrier properties at high humidity, especially the oxygen barrier properties, improve over time immediately after exposure to high humidity, and the time required for the improvement tendency to reach equilibrium is usually shorter than 1000 hours, preferably shorter than 900 hours, more preferably shorter than 800 hours, particularly shorter than 700 hours, and especially preferably shorter than 600 hours.

The present composition has excellent gas barrier properties at high humidity; however, from the viewpoint of achieving superior gas barrier properties at high humidity, before the composition is exposed to high humidity, the composition is preferably allowed to stand still for a certain time period at medium humidity. The theory behind achieving such effects is not clear; however, it is presumed that such effects are achieved because, by allowing the composition to stand still for a certain time period at medium humidity, the interaction between the layered zinc hydroxide formed by the following high humidity exposure and the EVOH resin molecules becomes even stronger.

In the present disclosure, at medium humidity means at 20 ± 5°C and 60 ± 15%RH.

The settling time at medium humidity is usually shorter than 1000 hours, preferably shorter than 900 hours, more preferably shorter than 800 hours, particularly shorter than 700 hours, and especially preferably shorter than 600 hours.

From the viewpoint of excellent gas barrier properties, especially oxygen gas barrier properties, at high humidity, when the present composition is measured by wide-angle X-ray diffraction (XRD) using a CuKα line, a main peak of X-ray diffraction is preferably present at 2θ = 2 to 15°, more preferably at 2θ = 4 to 14°, and particularly preferably at 2θ = 6 to 13°.

The main peak of the X-ray diffraction observed at 2θ = 2 to 15° when measurement is performed by wide-angle X-ray diffraction (XRD) using the CuKα line is preferably a peak derived from layered zinc hydroxide. In the present disclosure, the layered zinc hydroxide satisfies the following formula (1).

Znₐ(OH)_{b}Aⁿ⁻_{(2a - b)/n} ... (1)

The A represents an anionic ligand having a valency of n- other than the hydroxy ligand. However, O (oxo ligand) is excluded as A. n is an integer of 1 or more. a and b are each a number more than 0 and satisfy a/b = 0.1 to 10.

Note that the wide-angle X-ray diffraction (XRD) measurement is performed under the following conditions.

### (Measurement Conditions)

- Used instrument: D8 DISCOVER (available from Bruker Japan)
- Detector: Two dimensional detector VANTEC-500 (available from Bruker Japan)
- Voltage: 50 kV
- Current: 100 mA
- Camera length: 100 mm
- Measurement method: Reflection method
- Integration time: 20 minutes
- Wavelength: CuKα line (Kα1 and Kα2 are not separated)
- Detector position: 2θ = 10°, 35°
- X-ray incident angle: θ = 0.3°
- Conditions for one-dimensional transformation in 2θ direction: 2θ = 0 to 59°, angle of direction (chi) = -110 to -70°

As the sample to be used for the wide-angle X-ray diffraction, the composition in a film form described below may be used as is. Furthermore, in the case where the composition described above is laminated with another substrate, when the composition layer can be released, the measurement is performed by releasing the composition layer, and when releasing is not possible, measurement can be performed in a state where the composition layer is layered on the other substrate. Note that, at the time of the measurement, the thickness of the released composition layer (film) is preferably 30 µm or more and, when the thickness of the film is not sufficient, the film may be layered.

The present composition thus produced is prepared into various forms such as a pellet, a powder form, or a liquid form, and is provided as a molding material for various molded bodies. In particular, in the present disclosure, when the composition is provided as a liquid molding material, the effect of the present disclosure tends to be obtained more efficiently, which is preferable.

### Molded Body

Examples of the shape of the molded body containing the present composition include a film, a sheet, a tape, a cup, a tray, a tube, a bottle, a pipe, a filament, an extruded article with an atypical cross-section, and various irregularly-shaped molded articles.

The molding method of the molded body is not particularly limited, and any molding method can be applied as long as the molding method is applicable to a general resin composition. For example, a method in which a film is formed by using a solution of the composition (coating liquid) containing the composition, or a melt molding method is used. Examples of the melt molding method include extrusion molding methods (for example, T-die extrusion, inflation extrusion, blow molding, melt spinning, and profile extrusion) and injection molding methods.

### Film and Multilayer Structure

The film containing the present composition described above is obtained by forming a film using a composition containing the present composition described above and is preferably obtained by forming a film using the composition described above.

Examples of the method for forming the film described above include a method of using a solution of a composition (coating liquid) containing the composition, and a method of melt-molding the present composition by using an extruder. Among these, a method of using the present composition (coating liquid) is preferred. Furthermore, in the case where the coating liquid is used, the solid content concentration is usually from 0.5 to 30 mass%, and preferably from 5 to 20 mass%.

Examples of the preparation of the coating liquid include a method in which all components are charged at once in a solvent and mixed; and a method in which some components are dissolved in a solvent to obtain a solution, and other components are added and mixed into this solution. Among these, from the viewpoint of workability, a method, in which an EVOH resin (A) is dissolved in a solvent to obtain a solution and then other components are added and mixed into this solution, is preferred.

As the solvent described above, a mixed solvent of water and a lower alcohol can be used. Specifically, a mixed solvent containing water and at least one lower alcohol having from 1 to 5 carbon atoms, such as methanol, ethanol, 1-propanol, 2-propanol, 1-butanol, and 2-butanol, can be used.

As the film formation method described above, for example, a known method, such as a melt extrusion method, a casting method, or a method by coating, can be employed. Among these, the method by coating is preferred.

The coating method described above includes known methods, such as bar coating, roll coating, die coating, gravure coating, comma coating, and screen printing.

After the application, for example, a film made of the composition can be obtained by drying by, for example, heating treatment at 60 to 105°C for 0.5 to 10 minutes. Furthermore, the film may be optionally subjected to stretching operation, such as uniaxial stretching or biaxial stretching.

The film may be a monolayer structure or a multilayer structure. The multilayer structure preferably includes at least one layer made of the film described above. Furthermore, the multilayer structure may be layered on a formed film or may be layered on another substrate resin.

The thickness of the film described above is usually from 1 to 5000 µm, preferably from 1 to 100 µm, and more preferably from 1 to 50 µm. Note that, in the case where the formed film described above has a multilayer structure, a sum of thicknesses of all films made of the composition is taken as the thickness of the film.

Examples of the substrate resin include polyethylene-based resins such as linear low-density polyethylene, low-density polyethylene, ultra low-density polyethylene, medium-density polyethylene, high-density polyethylene, ethylene-propylene (block and random) copolymers, and ethylene-α-olefin (α-olefin having from 4 to 20 carbon atoms) copolymers; polypropylene-based resins such as polypropylene and propylene-α-olefin (α-olefin having from 4 to 20 carbon atoms) copolymers; polyolefin-based resins in a broad sense including (unmodified) polyolefin-based resins such as polybutene, polypentene, and polycyclic olefin-based resins (polymers having a cyclic olefin structure in at least one of the main chain and a side chain), and modified olefin resins such as unsaturated carboxylic acid-modified polyolefin-based resins in which any of these polyolefins is graft-modified with an unsaturated carboxylic acid or an ester thereof; ionomers; ethylene-vinyl acetate copolymers; ethylene-acrylic acid copolymers; ethylene-acrylate copolymers; polyester-based resins; polyamide-based resins (including copolymerized polyamide); polyvinyl chloride; polyvinylidene chloride; acrylic-based resins; polystyrenes; vinyl ester-based resins; polyester-based elastomers; polyurethane-based elastomers; polystyrene-based elastomers; halogenated polyolefins such as chlorinated polyethylene and chlorinated polypropylene; and aromatic or aliphatic polyketones. One of these may be used alone or two or more thereof may be used in combination. Furthermore, these substrate resins may be subjected to surface treatment, such as corona treatment.

Note that linear low-density polyethylene, low-density polyethylene, ultra low-density polyethylene, medium-density polyethylene, and high-density polyethylene are each a term commonly used to represent a type of polyethylene.

The oxygen permeability of the film made of the present composition is preferably 15 cc·20 µm/m²·day·atm (cm³·20 µm/m²·day·atm) or less, more preferably 10 cc·20 µm/m²·day·atm or less, and particularly preferably 5 cc·20 µm/m²·day·atm or less. Note that the oxygen permeability is measured in an environment at 20°C and 90%RH. The lower limit of the oxygen permeability is usually 0 cc·20 µm/m²·day·atm. Furthermore, the oxygen permeability can be determined by an oxygen permeability measurement device.

As a sample used for the oxygen permeability, in the case where the composition described above is laminated with another substrate, the measurement may be performed by releasing the composition layer or may be performed in a state where the composition layer is layered on such another substrate. Note that, at the time of measurement, the thickness of the composition layer (film) is preferably from 5 to 20 µm.

The present composition and the film made of the present composition are useful as packaging materials and, especially, can be suitably used as packaging materials for food products, pharmaceutical products, and the like.

### Examples

Hereinafter, the present disclosure will be more specifically described with reference to Examples, but the present disclosure is not limited to the Examples below as long as the gist of the present disclosure is not deviated. In the examples, "parts" and "%" are based on mass.

Prior to the examples, the following components were prepared.

### EVOH Resin (A)

- EVOH resin (A1): Content of ethylene structural unit: 25 mol%; degree of saponification: 99.6 mol%; MFR: 4 g/10 min (210°C; load: 2160 g)
   Zinc Oxide (B)
- Zinc oxide (B1): Zinc oxide; average particle size: 20 nm (available from FUJIFILM Wako Pure Chemical Corporation
   Zinc Salt (C)
- Zinc chloride (C1): Zinc chloride (available from FUJIFILM Wako Pure Chemical Corporation)
- Zinc nitrate (C2): Zinc nitrate hexahydrate (available from FUJIFILM Wako Pure Chemical Corporation)
- Zinc lactate (C3): Zinc lactate trihydrate (available from FUJIFILM Wako Pure Chemical Corporation)
- Zinc salicylate (C4): Zinc salicylate trihydrate (available from FUJIFILM Wako Pure Chemical Corporation)
- Zinc stearate (C5): Zinc stearate (available from FUJIFILM Wako Pure Chemical Corporation)

### Example 1

In 45 parts of a mixed solvent of water/1-propanol = 1/1 (volume ratio), 5 parts of the EVOH resin (A1) described above was added and heated and agitated at 87°C for 1 hour to completely dissolve the EVOH resin (A1). This solution was allowed to cool to 55°C, and 0.8 parts of the zinc oxide (B1) in terms of metal content described above relative to 100 parts of the EVOH resin (A1) and 1 part of the zinc chloride (C1) in terms of metal content relative to 100 parts of the EVOH resin (A1) were each added, and the mixture was heated and agitated 87°C for 2 hours. Thus, a coating liquid was prepared. The obtained coating liquid was applied onto a PET substrate that had been corona-treated and that had a thickness of 12 µm by using a wire bar #24 and dried at 80°C for 5 minutes. This process was performed twice, and thus a two-layer film including the EVOH film layer having a thickness of 6 µm laminated on the PET substrate was obtained.

### Example 2

A two-layer film was obtained by the same method as in Example 1 except for changing the content of the zinc oxide (B1) in terms of metal to 1 part relative to 100 parts of the EVOH resin (A1) of Example 1.

### Example 3

A two-layer film was obtained by the same method as in Example 1 except for using the zinc nitrate (C2) in place of the zinc chloride (C1) of Example 1.

### Example 4

A two-layer film was obtained by the same method as in Example 1 except for using the zinc lactate (C3) in place of the zinc chloride (C1) of Example 1.

### Example 5

A two-layer film was obtained by the same method as in Example 1 except for changing the content of the zinc oxide (B1) in terms of metal to 0.005 parts relative to 100 parts of the EVOH resin (A1) of Example 1.

### Comparative Example 1

A two-layer film was obtained by the same method as in Example 1 except for using no zinc oxide (B1), changing the content of the zinc chloride (C1) in terms of metal to 1 part relative to 100 parts of the EVOH resin (A1) and the content of the zinc nitrate (C2) in terms of metal to 0.8 parts relative to 100 parts of the EVOH resin (A1) of Example 1.

### Comparative Example 2

A two-layer film was obtained by the same method as in Example 1 except for changing the content of the zinc oxide (B1) in terms of metal to 1 part relative to 100 parts of the EVOH resin (A1) and the content of the zinc chloride (C1) in terms of metal to 0.5 parts relative to 100 parts of the EVOH resin (A1) of Example 1.

### Comparative Example 3

A two-layer film was obtained by the same method as in Example 1 except for using the zinc salicylate (C4) in place of the zinc chloride (C1) of Example 1.

### Comparative Example 4

A two-layer film was obtained by the same method as in Example 1 except for using the zinc stearate (C5) in place of the zinc chloride (C1) of Example 1.

By using the obtained two-layer films containing the compositions of Examples 1 to 5 and Comparative Examples 1 to 4, measurement of oxygen permeability and wide-angle X-ray diffraction (XRD) measurement of the films described below were performed. The results are shown in Table 1 below.

### Measurement of Oxygen Permeability

The two-layer film obtained as described above was allowed to stand still in the humidity-controlled condition at 23°C and 70%RH for two days, and then the oxygen permeability (cc·20 µm/m²·day·atm) of the composition was measured in the condition at 20°C and 90%RH by using an oxygen permeability measurement device (Ox-tran2/21, available from MOCON). When the oxygen permeability changed over time, the measurement was continued until the value reached the equilibrium, and the equilibrium value was used as the measured value. Note that a smaller value of the oxygen permeability (cc·20 µm/m²·day·atm) means superior gas barrier properties.

### Wide-Angle X-Ray Diffraction (XRD) Measurement of Film

The EVOH film layer was released from the PET film layer of the two-layer film obtained as described above, and the EVOH film layer was layered in a manner that the thickness was 30 µm or more and used as a sample. The sample was subjected to wide-angle X-ray diffraction (XRD) measurement under the following conditions.

### (Measurement Conditions)

- Used instrument: D8 DISCOVER (available from Bruker Japan)
- Detector: Two dimensional detector VANTEC-500 (available from Bruker Japan)
- Voltage: 50 kV
- Current: 100 mA
- Camera length: 100 mm
- Measurement method: Reflection method
- Integration time: 20 minutes
- Wavelength: CuKα line (Kα1 and Kα2 are not separated)
- Detector position: 2θ = 10°, 35°
- X-ray incident angle: θ = 0.3°
- Conditions for one-dimensional transformation in 2θ direction: 2θ = 0 to 59°, angle of direction (chi) = -110 to -70°

**Table 1**

| Examples | Content of zinc oxide (B) in terms of metal (part) | Content of zinc salt (C) in terms of metal (part) | | Content of zinc salt (C) in terms of metal/content of zinc oxide (B) in terms of metal | Oxygen permeability (cc·20 µm/m²·day·at m) *20°C, 90%RH | Oxygen permeability equilibrium time (hour) | X-ray diffraction 20 |
|---|---|---|---|---|---|---|---|
| Example 1 | 0.8 | Zinc chloride | 1 | 1.25 | 3.0 | 420 | 11.3° |
| Example 2 | 1 | Zinc chloride | 1 | 1 | 9.1 | 170 | Unmeasured |
| Example 3 | 0.8 | Zinc nitrate | 1 | 1.25 | 2.1 | 450 | 9.1° |
| Example 4 | 0.8 | Zinc lactate | 1 | 1.25 | 9.0 | 240 | 9.8° |
| Example 5 | 0.005 | Zinc chloride | 1 | 200 | 10.6 | 170 | Unmeasured |
| Comparative Example 1 | - | Zinc chloride | 1 | - | 26.0 | 260 | Unmeasured |
| | | Zinc nitrate | 0.8 | | | | |
| Comparative Example 2 | 1 | Zinc chloride | 0.5 | 0.5 | 20.7 | 240 | Unmeasured |
| Comparative Example 3 | 0.8 | Zinc salicylate | 1 | 1.25 | 13.8 | 310 | Unmeasured |
| Comparative Example 4 | 0.8 | Zinc stearate | 1 | 1.25 | 14.7 | 170 | Unmeasured |

From the results in Table 1 above, the compositions of Examples 1 to 5 containing the zinc oxide (B) and the specific zinc salt (C) in the EVOH resin (A) had superior gas barrier properties compared to those of the composition of Comparative Example 1 using no zinc oxide (B) and the compositions of Comparative Examples 3 and 4 using none of the specific zinc salt (C).

Furthermore, the compositions of Examples 1 to 5 satisfying the specific relationship between the zinc oxide (B) and the zinc salt (C) had superior gas barrier properties compared to the composition of Comparative Example 2 that did not satisfy the specific relationship between the zinc oxide (B) and the specific zinc salt (C).

Specific embodiments of the present disclosure were described in the above examples, but the above examples are merely illustrative and are not to be construed as limiting. Various modifications apparent to those skilled in the art are intended to be within the scope of the present disclosure.

### Industrial Applicability

Because the present composition has excellent gas barrier properties, the present composition is useful as various packaging materials for various food products, seasonings such as mayonnaise and dressing, fermented food products such as miso, oil- and fat-based food products such as salad oil, beverages, cosmetics, and pharmaceuticals.

## Claims

1. A composition comprising an ethylene-vinyl alcohol copolymer (A), a zinc oxide (B), and a zinc salt (C) other than the zinc oxide (B),
wherein the zinc salt (C) is an inorganic zinc salt and/or an organic zinc salt having from 1 to 6 carbon atoms, and
wherein a mass ratio [(C)/(B)] of a content of the zinc salt (C) in terms of metal to a content of the zinc oxide (B) in terms of metal is more than 0.5.

2. The composition according to claim 1, wherein the content of the zinc oxide (B) in terms of metal is from 0.005 to 10 parts by mass relative to 100 parts by mass of the ethylene-vinyl alcohol copolymer (A).

3. The composition according to claim 1 or 2, wherein the zinc salt (C) is an inorganic zinc salt.

4. The composition according to claim 1 or 2, wherein a main peak of X-ray diffraction is present at 2θ = 2 to 15°, as measured by wide-angle X-ray diffraction (XRD) using a CuKα line.

5. A molded body comprising the composition claim 1 or 2.

6. A film comprising the composition claim 1 or 2.

7. A multilayer structure comprising a layer containing the composition claim 1 or 2.
